# EUROPEAN PATENT SPECIFICATION

(11) **EP 0 803 143 B1**
(45) Date of publication and mention of the grant of the patent: **12.08.1998**
(21) Application number: 95940886.5
(22) Date of filing: 01.12.1995
(51) Int. Cl.: H02G 15/064, H02G 15/184, H02G 15/18, H01R 13/53

(54) **PRESTRETCHED MODULAR BARRIER BOOT**
RADIAL AUFGEWEITETE, MODULARE SPERRHÜLLE
EMBOUT D'ISOLATION MODULAIRE PREALABLEMENT RADIALEMENT ETENDU

(30) Priority: 13.01.1995 DE 19500804
(43) Date of publication of application: 29.10.1997
(73) Proprietor: MINNESOTA MINING AND MANUFACTURING COMPANY, St. Paul, Minnesota 55133-3427 (US)
(72) Inventor: HELLBUSCH, Dieter, D-21217 Seevetal 2 (DE); KRABS, Raymond, A., W., D-21079 Hamburg (DE); ROELING, Werner, D-21266 Jesteburg (DE)
(74) Representative: Patentanwälte Hauck, Graalfs, Wehnert, Döring, Siemons
(86) International application number: US9515621
(87) International publication number: WO9621963

(56) References cited:
- EP-A- 0 504 035
- EP-A- 0 547 656
- WO-A-93/22816
- WO-A-94/22196
- WO-A-95/29524
- DE-A- 3 248 212
- DE-A- 3 802 435

## Description

The invention refers to a resiliently deformable, approximately T-shaped end closure cap of electrically insulating material for electrical cable terminations.

### PRIOR ART

Particularly in connection with electrical switching implements or the like it is frequently required to connect the equipment terminals with a cable such that the connection is effectively insulated and sufficiently protected against the penetration of moisture. The equipment terminal normally includes an insulator body, e.g. as a part of a feed-through means in a wall which provides an annular sealing surface, e.g. in the form of an outer cone. A T-shaped insulating closure cap for an electrical cable termination has become known from the DE 32 48 212, wherein the cable end including the connection lug is introduced through the stem of the T-shaped closure cap on an inner cone of a transverse arm cooperating with an outer cone of an insulator body. The T-shaped insulator cap has a relatively thick wall of relatively stiff material.

From the DE 32 33 572 a T-shaped closure cap has become known with the cable end including the connection lug being introduced through the stem thereof. One end of the transverse arm is formed with an outer cone, and the opposite end is formed with an inner cone. The inner cone cooperates with an outer cone of the insulator body of the equipment terminal. The transverse arm is hollow and receives the threaded connection means for the connection lug. In the known embodiment the T-shaped body defines a kind of modulus such that one T-shaped body is used for each cable connection. The known electrical cable termination connector, however, is expensive to manufacture. The sealing of the T-shaped insulating body against the equipment insulator body or against a second T-shaped insulator body, respectively, is achieved by the conical engagement of the parts, as described. Thus, the conical surfaces must be precisely formed in order to achieve the desired sealing effect preventing the penetration of moisture. Further, the T-shaped insulator body is relatively solid, and thus consumes a corresponding amount of material.

From the DE 38 02 435, a relatively thin walled closure cap for cable termination connectors has become known which consists of resiliently deformable material. It has also a T-shape and the stem is sealingly shifted onto the cable. The transverse arm of the T-shaped end closure cap is formed as a cylindrical sleeve which is partially closed at both ends by a radial flange. The inner circumference of the radial flanges forms an annular surface. The surface of the forward end portion cooperates with the sealing surface of the conical equipment insulator body. An easily removable plug is inserted into the other opening. The plug can be easily removed to allow a threading attachment of the lug to the insulator body. Further, the open end of the cap permits access to the lug for test purposes. Such an end closure cap is relatively easy to manufacture. Since it is made of relatively thin material, the inventory of material is relatively small. However, it is relatively difficult to mount to cap portions onto the cable and the insulator body, respectively.

In the US 3,515,798 a mechanical support means is disclosed to hold a radially expanded sleeve, e.g. for cable connections, in a radially expanded state. To this purpose a support coil of plastic material is used, with the adjacent windings inter-connected by a weakened portion. An end portion of the coil is extended back through the hollow cylindrical core to the opposite end so that upon a pulling of the end portion the support coil is unwound. Due to the inherent tension, the sleeve for example can be shrunk onto a cable connection (cold shrinking). The structure of the support coil necessitates a rotating of the unwound strip about the item onto which the enclosure is to be shrunk. Owing to missing space, this meets frequently to difficulties. Therefore, from W093/22816 is has become known to form a support core from a flexible sheet, preferably of plastic material, with opposing edges of the sheet including means to interlock the edges under maintenance of the cylindrical shape when the sheet is wrapped to form a hollow cylinder. The sheet has a series of substantial parallel lines cf localized weakening extending from one cf the opposite edges to a point near but short of the other cf the cpposite edges, with successive lines extending from alternate edges to define a strip beginning at a free end and continuing in a serpentine length between and around consecutive lines. When the end of the core is pulled, the core reverses the breaking direction by 180° at each return section.

In both cases, the support cores are designed to support elongated tubular articles of elastomeric material.

From WO94/22196 it has become known to provide a prestretched elastomeric article with a convoluted central area and two cylindrical ends which are stretched over two separate removable cores. The elastomeric article can thus be bent to seal an angled junction.

### SUMMARY OF THE INVENTION

The invention refers to a resiliently deformable T-shaped end closure cap of electrically insulating elastomeric material for an electrical cable termination which can be easily applied to the cable termination and which contemporarily allows the installation of the electrical connection without particular measures and auxiliary means.

In the end closure cap according to the invention, as defined in the appended claim 1, the forward end portion and the finger portion are radially expandable and are held in a radially expanded state by a hollow cylindrical suppcrt core prior to the installation cf the closure cap. with the invention, it has been recognized that also T-shaped end closure caps can be cold shrunk by means of mechanical removable support means. This considerably facilitates the installation of the closure cap. Furthermore, the cold shrinking of a stretched closure cap effects a very good sealing and prevents the penetration of moisture to the electrical connection. Finally, the closure caps of given dimensions can be applied to a larger range of diameters.

The end portion of the strips of the support coils are brought out in a suitable manner, e.g. through the open end of the finger or the rearward end portion, respectively. The expense for the mechanical support is relatively small. Furthermore, the individual relatively short support cores can be removed quickly.

In the invention, the closure cap first is shrunk onto the cone of the equipment terminal in that the respective support core is removed with the end portion of the strip extending through the open end of the rearward end portion. Thereafter, the electrical connection of the lug of the cable core with the equipment terminal is established, e.g. the threading operation can be carried out through the open end of the rearward end portion. Finally, the finger portion is shrunk onto the cable also by removing the associated support means. The removal of the support coil out of the forward end portion may be somewhat difficult. An embodiment of the invention provides the application of a support core which is disclosed by the W093/ 22816 and described above in more detail.

According to an alternative solution of the invention as defined in the appended claim 7, a T-shaped closure cap can be shrunk onto a cable termination connector in that both the forward end portion and the finger portion are held in a radially expanded state by a single extended support core. Forward end portion and finger in their relaxed state extending at an angle therebetween are approximately aligned coaxially by the single support core. By a partial removal of the support core first the forward end portion is shrunk onto the outer cone of the equipment terminal, with the closure cap bending back to its original shape. Thereafter, the electrical connection of the cable core is established. Finally, the remaining support core is removed, whereby the finger portion is shrunk onto the cable.

### BRIEF DESCRIPTION OF THE DRAWINGS

The invention is hereinafter explained in detail along embodiments of the invention illustrated by drawings, where
- Fig. 1: shows a first embodiment of a closure cap according to the invention in a non-expanded state,
- Fig. 2: shows the closure cap of Fig. 1 in an expanded state
- Fig. 3: shows partially in cross section the application of the closure cap of Figs. 1 and 2 to a cable termination connector,
- Fig. 4: shows a perspective view of the final insulation of the closure cap of Figs. 1 and 2 to the cable termination connector,
- Fig. 5: shows a perspective view of a second embodiment of a closure cap of the invention,
- Fig. 6: shows the closure cap of Fig. 5 in an expanded state, and
- Fig. 7: shows the closure cap of Figs. 5 and 6 in a mounted state on a cable termination connector.

### DETAILED DESCRIPTION OF THE DRAWINGS

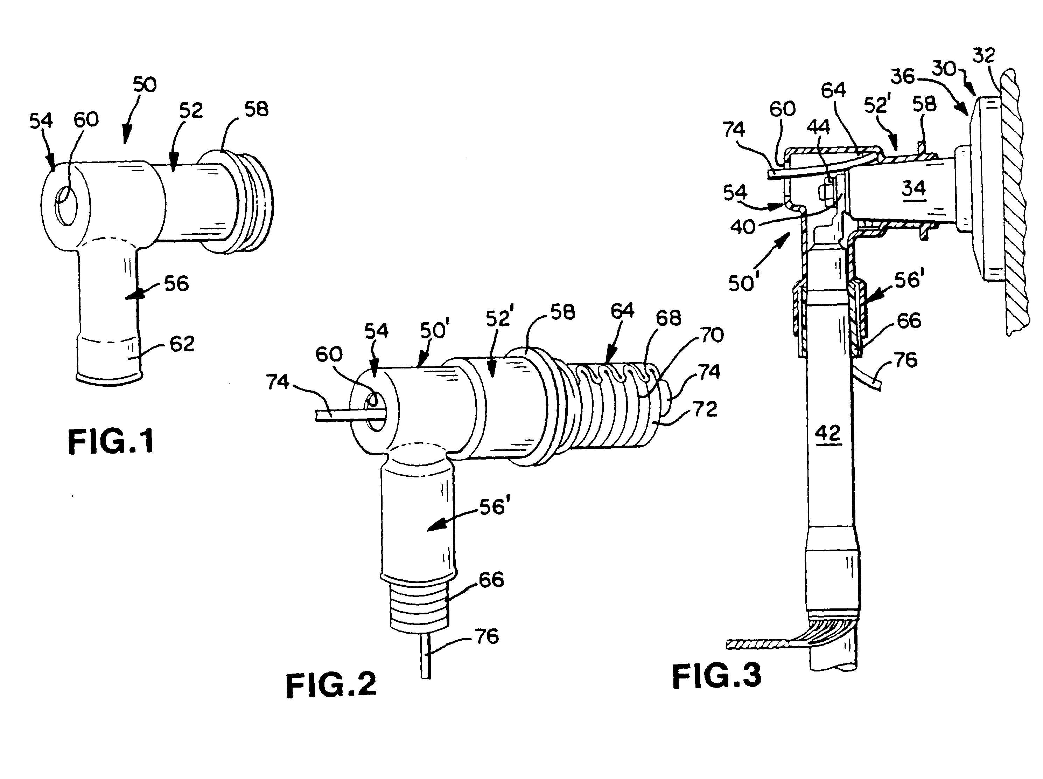

In Fig. 1 a closure cap 50 can be seen which is substantially T-shaped and includes transverse arms 52, 54 with the latter being significantly shorter than the first one. A finger-shaped stem 56 branches off between the transverse arms 54, 52. Stem 56 extends perpendicular to the transverse arms 52, 54. Transverse arms 52, 54 and finger 56 are tubular, with the forward arm 52 formed with an annular radially outwardly extending rib 58, and the shorter transverse arm 54 having a circular opening 60 at the free end thereof. Finger 56 is provided with a portion 62 having an enlarged diameter at the free end thereof.

As can be seen in Fig. 2 arm 52 is maintained in a radially expanded state by a support core 64. The radially expanded arm is designated with 52'. Finger 56' is held by a support coil 66 in an expanded state after being radially expanded through a known device. The support core 64 is known from the W093/22816 which is described above in more detail. It consists of a flat sheet of plastic material, with opposing parallel edges thereof being provided with interlocking means 68 to hold the sheet in a cylindrical form after being brought to a tubular shape. By weakening lines 70 which alternatingly extend from opposing edges and which extend nearly to the opposite edge, a serpentine continous strip 72 is formed, with an end portion 74 thereof extended back through the interior of the core through arm 52 and arm 54 beyond opening 60 as shown in Fig. 2. The support coil 66 is also known, e.g. from US 3,515,798 as described. Such a support coil is generally known and thus needs no explanation. An end portion of the support coil 66 is returned from the free end as shown at 76.

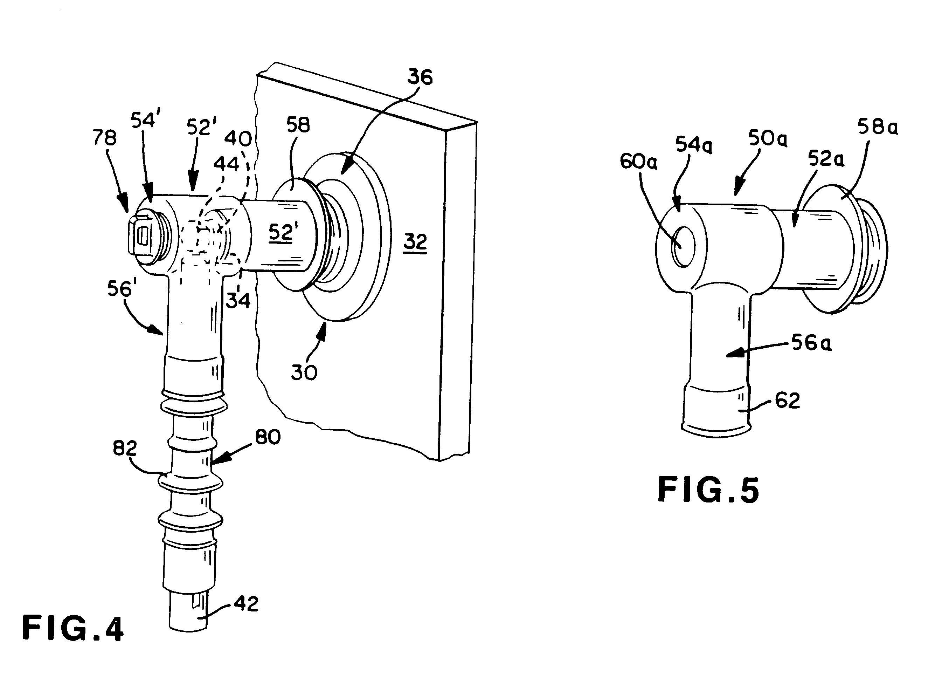

In Fig. 3, the closure cap 50' is partially applied to a sleeve 34 of feed-through means 30 in that a tension force is applied to the strip end portion 74. Support core 64 is not unwound by rotation, rather, the strip makes partial circular movements about 180°. Therefore, a lug 40 of cable 42 can be attached prior to the final removal of core 64. A nut can be actuated through opening 60 and tightened. It is also possible to remove support core 64 completely prior to the attachment of lug 40 by means of nut 44. Thereafter, support coil 64 is completely removed. Then, the removal of support coil 66 takes place by pulling the strip end portion 76. By this, finger portion 56' is shrunk onto the exterior of cable 42. This can be seen in Fig. 4.

In Fig. 4 it can be seen further that opening 60 is closed by a plug 78. It is mounted into opening 60 by a snapping connection and, thus, can be easily removed, e.g. to allow access to the electrical connection for test purposes.

Finally, in Fig. 4 can be seen that a sleeve 80 is shifted onto the end of cable 42, with the sleeve of insulating elastic material having axially spaced annular ribs 82. Such sleeve can be also shrunk onto the cable by a support coil.

Closure cap of Fig. 5 is identical with that of Fig. 1. Therefore, it is designated with 50a. Also the other reference numbers correspond to that of Fig. 1 only added by an "a". The embodiment shown in Fig. 5 is also manufactured for example by injection molding of a suitable elastomeric polymer as the embodiment of Fig. 1.

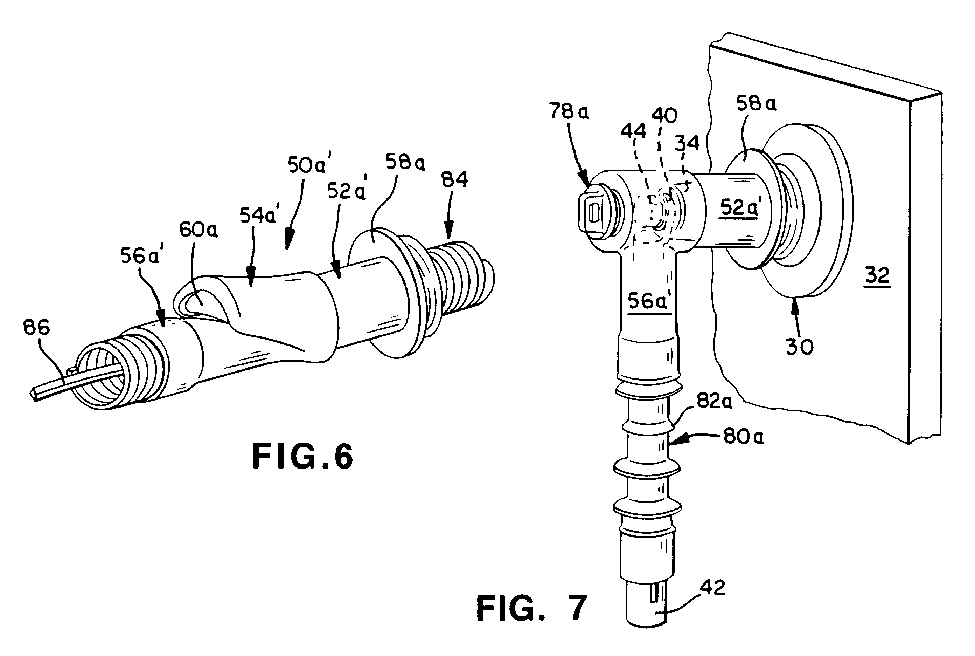

In Fig. 6, it is shown that end closure cap 50a of Fig. 5 is bent such that finger 56a and arm 52a are approximately coaxial for the accommodation of a throughgoing support coil 84, with an end portion thereof being led back through the interior thereof as shown at 86.

During installation, first the forward end portion 52a', is shrunk onto sleeve 34 of feed-through means 30 by a partial removal of support coil 84. By this, the closure cap 50a restores approximately to the angular shape of Fig. 5 so that upon a shifting on cable 42 lug 40 of cable core can be attached through opening 60a. Finally, the remaining support coil 84 is removed in order to shrink finger portion 56a' onto the cable or onto the sleeve 80a already mounted, respectively.

## Claims

1. A resiliently deformable T-shaped end closure cap (50) of electrically insulating elastomeric material for cable terminations which connect a cable (42) to an equipment terminal with said terminal extended through an insulator body (34) having an annular sealing surface and being adapted to form a cable core terminal, said end cap (50) comprising an open forward end portion (52) adapted to be sealingly shifted onto said insulator body, a rearward open end portion, and a finger portion (56) branching off from said closure cap between said end portions (52, 54) and adapted to be shifted onto said cable (42), characterized in that said forward end portion (52) and said finger portion (56) are held in a radially expanded state by separate approximately hollow cylindrical support cores (64, 66), with said support cores (64, 66) being formed by a coiled strip (72), said cores (64, 66) being unwound and removed by pulling an end portion (74, 76) of said strip which is extended back through the interior of said cores (64, 66), wherein said strip (72) of said core (64) supporting said forward end portion (52) is extended back through said open end (60) of said rearward end portion (54).

2. The end closure cap of claim 1, characterized by the application of a support core (64, 66) which comprises a flexible sheet, preferably of plastic material which is provided with interlocking means (68) at opposing edges to maintain the cylindrical form after wrapping said sheet to a hollow cylinder with weakening lines (70) alternatingly extending from opposing edges toward the other opposing edge and forming a serpentine strip (72).

3. The end closure cap of claim 2, wherein said support core (64, 66) is applied to said expanded forward end portion (52).

4. The end closure cap of claim 1, wherein said strip end portion (76) of said support core (66) for said expanded finger portion (56') is extended through the end of said expanded (56') finger portion.

5. The end closure cap of claim 1, wherein said strip end portion (76) of said support core (66) for-said expanded finger portion (66') is extended through the open end (60) of said rearward end portion (54).

6. The end closure cap of claim 1, wherein said rearward end portion (54) is adapted to be closed by a cap (78).

7. A resiliently deformable T-shaped end closure cap (50a) of electrically insulating elastomeric material for cable terminations which connect a cable (42) to an equipment terminal with said terminal extended through an insulator body (34) having an annular sealing surface and being adapted to form a cable core terminal, said end cap (50a) comprising an open forward end portion (52a) adapted to be sealingly shifted onto said insulator body (34), a rearward open end portion (54a), and a finger portion (56a) branching off from said closure cap (50a) between said end portions (52a, 54a) and adapted to be shifted onto said cable (42), characterized in that both the forward expanded end portion (52a) and the expanded finger portion (56a) are held in a radially expanded state by a single elongated support core (84), with the forward end portion (52a) and the finger portion (56a) being brought to a coaxial alignment after being bent out of the original relaxed shape.

8. The end closure cap of claim 7, wherein said support core (84) comprises a coiled strip, and wherein an end portion (86) of said support core strip is extended through the end of said expanded finger portion (56'a).

9. The end closure cap of claim 7 or 8, characterized by the application of a said support core (84) which comprises a flexible sheet, preferably of plastic material which is provided with interlocking means at opposing edges to maintain the cylindrical form after wrapping said sheet to a hollow cylinder, with weakening lines alternatingly extending from opposing edges approximately toward the other opposing edge and forming a continuous serpentine strip.

10. The end closure cap of claim 9, wherein said rearward open end portion (54a) is adapted to be closed by a cap (78a) after removal of said support core (84).

## Patentansprüche

1. Elastisch verformbare, annähernd T-förmige Umhüllung (50) aus elektrisch isolierendem Material für eine elektrische Kabelendverschlußverbindung zum Anschließen eines Kabels (42) an einem Geräteanschluß, der durch einen Isolierkörper (34) hindurch und eine darauf vorgesehene ringförmige Dichtfläche aus dem Gerät herausgeführt und zur Herstellung eines Kabeladeranschlusses ausgebildet ist, wobei die Umhüllung (50) einen vorderen offenen Endabschnitt (52) zum abdichtenden Aufschieben auf die Dichtfläche des Isolierkörpers, einen hinteren offenen Endabschnitt und einen zwischen den Endabschnitten (52, 54) abzweigenden Finger zum Aufschieben auf das Kabel (50) aufweist, dadurch gekennzeichnet, daß vorderer aufgeweiteter Endabschnitt (52) und Finger (56) durch getrennte, annähernd hohlzylindrische Stützkerne (64, 66) in radial aufgeweitetem Zustand gehalten sind, wobei die Stützkerne (64, 66) durch einen spulenförmig aufgewickelten Streifen (72) gebildet sind, wobei die Stützkerne (64, 66) durch Ziehen an einem durch das Innere des Stützkerns zurückgeführten und durch das offene Ende (60) des Endabschnitts (54) des den vorderen Endabschnitt (52) stützenden Stützkern (64) herausgeführten Streifenendabschnitts (74, 76) abwickelbar und entfernbar ist.

2. Umhüllung nach Anspruch 1 oder 2, gekennzeichnet durch die Anwendung eines Stützkerns (64, 66), der aus einem flexiblen Blatt, vorzugsweise aus Kunststoffmaterial, besteht, das an gegenüberliegenden Kanten Mittel (68) zum Verriegeln der Kanten aufweist zur Beibehaltung der Zylinderform nach dem Aufwickeln des Blattes zu einem Hohlzylinder, wobei von beiden Kanten abwechselnd Schwächungslinien (70) ausgehen, die sich zur gegenüberliegenden Kante erstrecken und einen kontinuierlichen serpentinenförmigen Streifen (72) bilden.

3. Umhüllung nach Anspruch 2, dadurch gekennzeichnet, daß der Stützkern (64, 66) für die Aufweitung des vorderen Endabschnitts (52) eingesetzt wird.

4. Umhüllung nach Anspruch 1, dadurch gekennzeichnet, daß der Streifenendabschnitt (76) des Stützkerns (66) für den aufgeweiteten Finger (56') durch das Ende des aufgeweiteten Fingers (56') herausführbar ist.

5. Umhüllung nach Anspruch 1, dadurch gekennzeichnet, daß der Streifenendabschnitt (76) des Stützkerns (66) für den aufgeweiteten Finger (56') durch das offene Ende des hinteren Endabschnitts (54) herausführbar ist.

6. Umhüllung nach Anspruch 1, dadurch gekennzeichnet, daß der hintere Endabschnitt (54) durch eine Kappe (78) verschließbar ist.

7. Elastisch verformbare T-förmige Umhüllung (50a) aus elektrisch isolierendem Material für eine elektrische Kabelendverschlußverbindung zum Anschließen eines Kabels (42) an einem Geräteanschluß, der durch einen Isolierkörper hindurch und eine darauf vorgesehene ringförmige Dichtfläche aus dem Gerät herausgeführt und zur Herstellung eines Kabeladeranschlusses ausgebildet ist, wobei die Umhüllung (50a) einen vorderen offenen Endabschnitt (52a) zum abdichtenden Aufschieben auf die Dichtfläche des Isolierkörpers (34), einen hinteren offenen Endabschnitt (54a) und einen zwischen den Endabschnitten abzweigenden Finger (56a) zum abdichtenden Aufschieben auf das Kabel aufweist, dadurch gekennzeichnet,daß vorderer aufgeweiteter Endabschnitt (52a) und aufgeweiteter Finger (56a) durch einen einzigen langgestreckten Stützkern (84) im radial aufgeweiteten Zustand gehalten sind, indem vorderer Endabschnitt (52a) und Finger (56a) durch Verbiegung aus der ursprünglich entspannten Form annähernd koaxial zueinander ausgerichtet sind.

8. Umhüllung nach Anspruch 7, dadurch gekennzeichnet, daß der Stützkern (84) einen spulenförmig gewickelten Streifen aufweist, von dem ein Streifenendabschnitt (86) durch das Ende des aufgeweiteten Fingers (56'a) herausführbar ist.

9. Umhüllung nach Anspruch 7 oder 8, gekennzeichnet durch die Anwendung eines Stützkerns (84), der aus einem flexiblen Blatt, vorzugsweise aus Kunststoffmaterial, besteht, das an gegenüberliegenden Kanten Mittel zum Verriegeln der Kanten aufweist zur Beibehaltung der Zylinderform nach dem Aufwickeln des Blattes zu einem Hohlzylinder, wobei von beiden Kanten abwechselnd Schwächungslinien ausgehen, die sich zur gegenüberliegenden Kante erstrecken und einen kontinuierlichen serpentinenförmigen Streifen (72) bilden.

10. Umhüllung nach Anspruch 9, dadurch gekennzeichent, daß der hintere offene Endabschnitt (54a) nach Entfernung des Stützkerns (84) durch eine Kappe (78a) verschließbar ist.

## Revendications

1. Embout de fermeture d'extrémité en forme de T élastiquement déformable (50) en matériau élastomère électriquement isolant pour terminaisons de câbles électriques connectant un câble (42) à une borne d'équipement, ladite borne s'étendant à travers un corps isolant (34) ayant une surface d'étanchéité annulaire et étant prévu pour former une borne d'âme de câble, ledit embout d'extrémité (50) comprenant une portion d'extrémité avant ouverte (52) prévue pour être décalée de manière étanche sur ledit corps isolant, une portion d'extrémité ouverte arrière et une portion de doigt (56) émergeant depuis ledit embout de fermeture entre lesdites portions d'extrémité (52, 54) et prévue pour être décalée sur ledit câble (42), caractérisé en ce que ladite portion d'extrémité avant (52) et ladite portion de doigt (56) sont maintenues dans un état radialement expansé par des noyaux supports cylindriques séparés approximativement creux (64, 66), lesdits noyaux supports (64, 66) étant formés par une bande bobinée (72), lesdits noyaux (64, 66) étant déroulés et retirés en tirant une portion d'extrémité (74, 76) de ladite bande s'étendant en retour à travers l'intérieur desdits noyaux (64, 66), dans lequel ladite bande (72) dudit noyau (64) soutenant ladite portion d'extrémité avant (52) s'étend en retour à travers ladite extrémité ouverte (60) de ladite portion d'extrémité arrière (54).

2. Embout de fermeture d'extrémité selon la revendication 1, caractérisé par l'application d'un noyau support (64, 66) comprenant une feuille souple, de préférence en matière plastique, pourvue de moyens de verrouillage mutuel (68) sur des bords opposés, pour maintenir la forme cylindrique après enroulement de ladite feuille sur un cylindre creux, avec des lignes d'affaiblissement (70) s'étendant alternativement depuis les bords opposés vers l'autre bord opposé et formant une bande en serpentin (72).

3. Embout de fermeture d'extrémité selon la revendication 2, dans lequel ledit noyau support (64, 66) est appliqué à ladite portion d'extrémité avant expansée (52).

4. Embout de fermeture d'extrémité selon la revendication 1, dans lequel ladite portion d'extrémité en bande (76) dudit noyau support (66) pour ladite portion de doigt expansé (56') se prolonge à travers l'extrémité de ladite portion de doigt expansé (56').

5. Embout de fermeture d'extrémité selon la revendication 1, dans lequel ladite portion d'extrémité en bande (76) dudit noyau support (66) pour ladite portion de doigt expansé (66') se prolonge à travers l'extrémité ouverte (60) de ladite portion d'extrémité arrière (54).

6. Embout de fermeture d'extrémité selon la revendication 1, dans lequel ladite portion d'extrémité arrière (54) est prévue pour être fermée par un embout (78).

7. Embout de fermeture d'extrémité en forme de T élastiquement déformable (50a) en matériau élastomère électriquement isolant pour terminaisons de câbles électriques connectant un câble (42) à une borne d'équipement, ladite borne s'étendant à travers un corps isolant (34) ayant une surface d'étanchéité annulaire et étant prévue pour former une borne d'âme de câble, ledit embout d'extrémité (50a) comprenant une portion d'extrémité avant ouverte (52a) prévue pour être décalée de manière étanche sur ledit corps isolant (34), une portion d'extrémité ouverte arrière (54a) et une portion de doigt (56a) émergeant depuis ledit embout d'extrémité (50a) entre lesdites portions d'extrémité (52a, 54a) et prévue pour être décalée sur ledit câble (42), caractérisé en ce que, aussi bien ladite portion d'extrémité avant expansée (52a) que ladite portion de doigt expansé (56a) sont maintenues dans un état radialement prolongé par un simple noyau support allongé (84), la portion d'extrémité avant (52a) et la portion de doigt (56a) étant amenées en alignement coaxial après avoir été courbées en dehors de la forme d'origine de détente.

8. Embout de fermeture d'extrémité selon la revendication 7, dans lequel ledit noyau support (84) comprend une bande bobinée et dans lequel une portion d'extrémité (86) de ladite bande de noyau support est prolongée à travers l'extrémité de ladite portion de doigt expansé (56'a).

9. Embout de fermeture d'extrémité selon la revendication 7 ou 8, caractérisé par l'application d'un dit noyau support (84) comprenant une feuille souple, de préférence faite de matière plastique, pourvue de moyens de verrouillage mutuel sur des bords opposés, pour maintenir la forme cylindrique après enroulement de ladite feuille sur un cylindre creux avec des lignes d'affaiblissement, s'étendant alternativement depuis les bords opposés vers l'autre bord opposé et formant une bande continue en serpentin.

10. Embout de fermeture d'extrémité selon la revendication 9, dans lequel ladite portion d'extrémité ouverte arrière (54a) est prévue pour être fermée par un embout (78a) après retrait dudit noyau support (84).
